# DEMANDE DE BREVET EUROPEEN

(11) **EP 1 862 392 A1**
(43) Date de publication de la demande: **05.12.2007**
(21) Numéro de dépôt: 06114847.4
(22) Date de dépôt: 01.06.2006
(51) Int. Cl.: B65D 3/04

(54) **Emballage flexible en matière plastique**

(71) Demandeur: Aisapack Holding SA, 1896 Vouvry (CH)
(72) Inventeur: Thomasset, Jacques, Vouvry 1896 (CH); Keller, Gerhard, Vouvry 1896 (CH); Roy, Hugues-Vincent, Vouvry 1896 (CH); Pellissier, Joachim, Vouvry 1896 (CH)
(74) Mandataire: Grosfillier, Philippe

(57) **Abrégé**

L'invention concerne un emballage plastique pour produits liquides ou visqueux comprenant trois éléments distincts, à savoir une paroi latérale cylindrique flexible formée à partir d'une feuille enroulée autour d'un mandrin, un fond au moins partiellement rigide et une partie supérieure au moins partiellement rigide qui comprend un goulot; ledit emballage étant adapté pour se reposer sur ledit fond et ayant une hauteur H et un diamètre D dont le rapport H/D se situe entre 1 et 5 ; la paroi latérale et les deux autres éléments prenant appui sur un mandrin lors de leur assemblage.

L'invention concerne également un procédé de fabrication d'un emballage tel que décrit précédemment.

## Description

### Domaine de l'invention

La présente invention se situe dans le domaine des emballages en matière plastique constitués principalement de trois éléments préfabriqués, à savoir d'une paroi latérale formant un corps tubulaire comprise entre un fond semi-rigide et un goulot rigide. Ces emballages permettent d'allier les propriétés fonctionnelles des emballages de types bouteilles et de types poches souples.

La présente invention est particulièrement destinée, mais pas de façon exclusive, aux utilisations suivantes :
- Conditionnement de boissons alimentaires telles que jus de fruits, boissons vitaminées, lait, thé froid, etc.
- Conditionnement de produits visqueux tels que dentifrice, crèmes de soins corporels, onctions pharmaceutiques, produits alimentaires (mayonnaise, ketchup, moutarde), etc.
- Conditionnement de produits techniques tels que silicone ou mastic.

### Etat de la technique

Il existe divers types d'emballages correspondants à la définition du chapitre précédent.

A titre d'exemple, on peut citer l'emballage divulgué dans le document brevet autrichien AT 293 944 où une tête semi-rigide est soudée à une feuille flexible mise en forme de tube cylindrique de manière à fabriquer une poche souple droite. La demande de brevet EP 1 362 797 présente également un emballage relativement similaire où le corps du container peut comporter à ses deux extrémités des pièces semi-rigides rapportées.

Les emballages de l'état de la technique offrent certes de nombreux avantages, mais il s'avère que leur réalisation dans la pratique n'est pas aisée. En effet, la réalisation d'emballages flexibles qui se comportent de manière adéquate à l'utilisation révèle plusieurs difficultés qui sont principalement liées à des problèmes de manque de rigidité et de non-consistance (grande variation des propriétés mécaniques et géométriques). Par exemple, lors de la production de l'emballage les points suivants sont critiques : Optimisation des épaisseurs des parois, palettisation à vide, transport sur les chaînes de production, remplissage, bouchonnage, palettisation après remplissage, etc...
Lors de l'utilisation de l'emballage, d'autres points critiques sont à prendre en considération, en particulier : Stabilité de l'emballage lorsqu'il est posé sur son fond (souvent les emballages flexibles ne sont pas parfaitement droits), ouverture sans risque de perte accidentelle du produit, possibilité de refermer l'emballage, etc...
La plupart de ces points critiques sont dus à la difficulté de produire des emballages flexibles ayant suffisamment de rigidité mécanique

### Exposé général de l'invention

La présente invention vise notamment à remédier aux problèmes précités.

A cet effet, elle concerne un emballage plastique pour produits liquides ou visqueux comprenant trois éléments distincts, à savoir une paroi latérale cylindrique flexible formée à partir d'une feuille enroulée autour d'un mandrin, un fond au moins partiellement rigide et une partie supérieure au moins partiellement rigide qui comprend un goulot; ledit emballage étant adapté pour se reposer sur ledit fond et ayant une hauteur H et un diamètre D dont le rapport H/D se situe entre 1 et 5 ; la paroi latérale et/ou les deux autres éléments prenant appui sur un mandrin lors de leur assemblage.

Divers mode de réalisation particulièrement avantageux de l'invention sont décrits dans les revendications dépendantes.

Il convient de relever que l'emballage selon l'invention offre de nombreuses améliorations par rapport à l'état de la technique (stabilité, résistance mécanique, etc...) grâce au fait que ses composants, lors de leur assemblage, prennent appui sur un mandrin.
En l'absence d'un tel support, il n'est pas possible d'obtenir un emballage aussi performant.

### Exposé détaillé de l'invention

L'invention est décrite plus en détail ci-après au moyen d'exemples illustrés par les figures suivantes :
La figure 1 représente la fixation de la partie supérieure à la paroi latérale
La figure 2 représente la fixation du fond à la paroi latérale

### Liste des références numériques utilisées sur les figures

1) Paroi latérale
2) Fond
3) Partie supérieure
4) Goulot
5) 1^{er} mandrin
6) 2^{e} mandrin
7) Collerette
8) Cylindre-support
9) Anneau-support

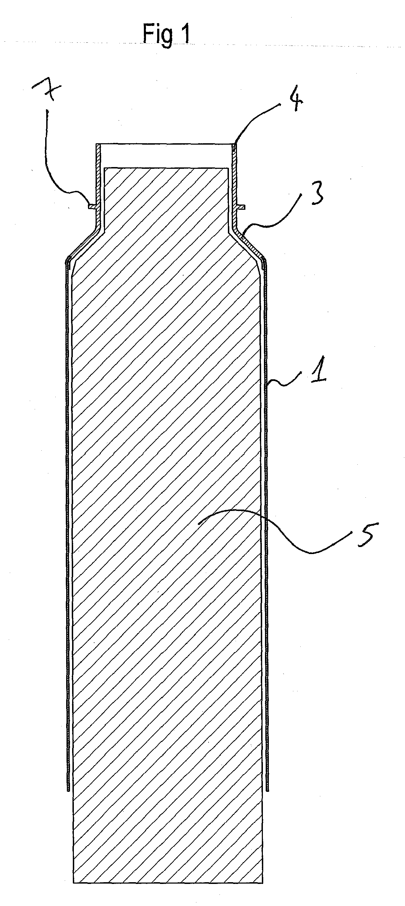

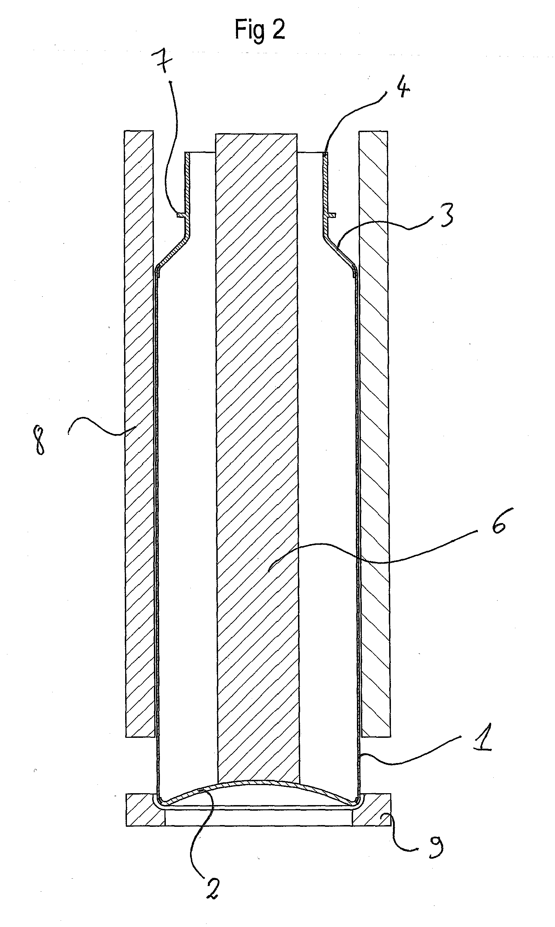

L'emballage illustré sur les figures 1 et 2 comprend une paroi latérale 1 constitué d'une feuille laminée enroulée, d'un fond 2 et d'une pièce supérieure 3 tous deux fixés à la paroi latérale 1.
La partie supérieure 3 est de préférence rigide alors que le fond 2 est formé d'un matériau plastique de préférence semi-rigide.

Au niveau de son goulot 4, l'emballage est muni d'une collerette 7 rigide qui fait office de moyen de manutention lorsque le tube est déplacé précédemment ou consécutivement à l'assemblage des éléments qui le composent.
Pour fixer la partie supérieure 3 à la paroi latérale 1 (figure 1), on dispose préalablement un mandrin 5 sur lequel les deux éléments 1,3 peuvent prendre appui.
De même (figure 2), pour fixer le fond 3 à la paroi latérale 1, on dispose préalablement un mandrin 6 sur lequel la partie centrale du fond 2 prend appui.
En outre, l'emballage est maintenu en place au moyen d'un cylindre-support 8 et d'un anneau-support 9.

L'utilisation de mandrins 5,6 lors du soudage de la partie supérieure 3 et du fond 2 à la paroi latérale 1 est d'une grande importance pour au moins deux raisons :
1) Positionnement très précis des éléments 1-3 les uns par rapport aux autres et ainsi assure la fabrication d'emballages consistants, de manière reproductible, qui tiennent parfaitement droit sur leur fond ;
2) Application d'une force régulière et constante lors de l'opération de soudage, ce qui permet d'obtenir des soudures de qualité.

L'emballage selon la présente invention présente l'avantage de n'utiliser que le minimum de matière nécessaire pour lui assurer ses performances ; c'est-à-dire qu'à chaque endroit la quantité de matière utilisée (donc l'épaisseur des parois en cet endroit) est optimisée. La plus grande partie de l'emballage est constituée par la paroi latérale cylindrique1 qui est composée à partir d'une feuille flexible mince. Cette paroi 1 doit protéger le produit emballé de l'extérieur et peut servir comme support pour la décoration graphique et textuelle. Du point de vue mécanique cette paroi 1 doit être suffisamment rigide pour ne pas se déformer sous le poids du produit. Les extrémités (partie supérieure 3 et fond 2) apportent la rigidité et la tenue à l'emballage et sont, au moins partiellement, rigides à paroi plus épaisse. Le fond 2 doit permettre de poser l'emballage de manière stable et droite. Le goulot 4 permet de supporter un système de fermeture amovible tel qu'un bouchon (vissé ou clipsé) ou d'un opercule soudé. Pour une manipulation aisée du système de fermeture il est nécessaire que le goulot 4 ait une certaine rigidité. D'autre part le goulot 4 permet le remplissage de l'emballage après fabrication. Un avantage de la présente invention est d'apporter la rigidité mécanique de l'emballage pour le remplissage par l'intermédiaire d'une collerette 7 solidaire du goulot 4. La collerette 7 rend possible la manipulation de l'emballage sur la remplisseuse ainsi que le maintien du goulot 4 lors de la pose du système de fermeture. Pour un bon maintien du goulot 4, il est préférable d'avoir une collerette 7 de largeur supérieure à 2 mm et d'épaisseur supérieure à 1 mm. Typiquement ces éléments sont en matière plastique telle que des polyoléfines (PE ou PP). Ces éléments peuvent être mono- ou multicouche et sont produits entre autre par injection moulage, compression moulage ou thermoformage. Pour que leurs propriétés mécaniques soient suffisantes pour permettre d'obtenir un emballage performant, ces éléments comportent de préférence au moins localement une épaisseur supérieure ou égale à 1 mm.

De plus un emballage à paroi flexible selon la présente invention présente l'avantage de pouvoir recourir à des feuilles laminées préalablement imprimées comme élément de paroi. Ces feuilles sont produites usuellement par lamination de films extrudés (ou coextrudés) et/ou de films soufflés. Ces feuilles comportent des films soudants constitués normalement de polyoléfines (PE ou PP) et peuvent aussi comporter des films fonctionnels pour améliorer les propriétés mécaniques (OPP, PET, PA, PS ...) et les propriétés barrières (PET, EVOH, PVDC, SiOx, AIOx, aluminium,...) Ces feuilles laminées présentent l'avantage de pouvoir être imprimées à plat avant de confectionner l'emballage et surtout d'obtenir des parois flexibles d'épaisseur très fine entre 100 et 400 microns et très régulières (avec des variations d'épaisseur inférieures à 10 microns). La finesse et la consistance de l'épaisseur de la paroi flexible permettent d'obtenir un emballage ayant un faible coût en matière tout en assurant ses performances.

## Revendications

1. Emballage plastique pour produits liquides ou visqueux comprenant trois éléments distincts, à savoir une paroi latérale cylindrique flexible (1) formée à partir d'une feuille enroulée autour d'un mandrin, un fond (2) au moins partiellement rigide et une partie supérieure (3) au moins partiellement rigide qui comprend un goulot (4); ledit emballage étant adapté pour se reposer sur ledit fond (2) et ayant une hauteur H et un diamètre D dont le rapport H/D se situe entre 1 et 5 ; la paroi latérale (1) et/ou les deux autres éléments (2,3) prenant appui sur un mandrin (5,6) lors de leur assemblage.

2. Emballage selon la revendication précédente dont la paroi latérale (1) forme un angle avec le fond qui se situe entre 89 degré et 91 degrés.

3. Emballage selon l'une des revendications précédentes comprenant des moyens de manipulation (7) au niveau dudit goulot (4).

4. Emballage selon la revendication précédente où lesdits moyens de manipulation sont une collerette (7) solidaire dudit goulot (4), de largeur supérieure à 2 mm et d'épaisseur supérieure à 1 mm.

5. Emballage selon l'une des revendications précédentes dont au moins 95% de ladite paroi latérale (1)est d'épaisseur constante et comprise entre 100 et 400 microns ; la variation de ladite épaisseur étant inférieure à plus ou moins 10 microns.

6. Emballage selon l'une des revendications précédentes dont le fond (2) et la partie supérieure (3) comportent au moins localement une épaisseur supérieure ou égale à 1mm.

7. Procédé de fabrication d'un emballage tel que défini dans l'une quelconque des revendications précédentes **caractérisé par le fait que** la paroi latérale (1), le fond (2) et la partie supérieure (3) prennent appui sur un mandrin (5,6) lors de leur assemblage.
